# EUROPÄISCHE PATENTANMELDUNG

(11) **EP 1 813 847 A2**
(43) Veröffentlichungstag der Anmeldung: **01.08.2007**
(21) Anmeldenummer: 07101242.1
(22) Anmeldetag: 26.01.2007
(51) Int. Cl.: F16K 31/06

(54) **Elektropneumatisches Sitzventil, insbesondere Vorsteuerventil**

(30) Priorität: 28.01.2006 DE 102006004095
(71) Anmelder: Bosch Rexroth AG, 17701 Schwieberdingen (DE)
(72) Erfinder: Bichot, Isabelle, 73054, Eislingen (DE); Möck, Manfred, 72517, Sigmaringendorf (DE); Widera, Jörg, 70839, Gerlingen (DE); Jungeilges, Rainer, 71282, Hemmingen (DE); Gädert, Heinz, 71642, Ludwigsburg (DE); Ghimpu-Mundinger, Radu, 71229, Leonberg (DE)
(74) Vertreter: Kietzmann, Lutz

(57) **Zusammenfassung**

Elektropneumatisches Sitzventil, insbesondere Vorsteuerventil, mit einer innerhalb eines Gehäuses (1) untergebrachten elektrischen Spule (2) zum elektromagnetischen Antrieb eines beweglichen Ankers (3), der über eine Feder (7) rückgestellt und über Ankerführungsmittel axial zur Betätigung mindestens eines Ventilsitzes (5) geführt ist, und der zur Verstärkung der magnetischen Kraft mit magnetischen Flussleitmitteln zusammenwirkt, wobei der Ventilsitz (4) Bestandteil eines Kunststoffelements (10) ist, an welchem benachbart zum Ventilsitz (4) ein Ankerführungsabschnitt (13) als Ankerführungsmittel mit nachfolgendem Spulenkörperabschnitt (11) zur Aufnahme der elektrische Spule (2) angeformt ist.

## Beschreibung

Die vorliegende Erfindung betrifft ein elektropneumatisches Ventil mit einer innerhalb eines Gehäuses untergebrachten elektrischen Spule zum elektromagnetischen Antrieb eines beweglichen Ankers, der über eine Feder rückgestellt und über Ankerführungsmittel axial zur Betätigung des Ventilsitzes geführt ist, und der zur Verstärkung der magnetischen Kraft mit magnetischen Flussleitmitteln zusammenwirkt.

Das Einsatzgebiet elektropneumatischer Sitzventile der hier interessierenden Art ist vornehmlich auf die Anwendung als Vorsteuerventil konzentriert. Ein Vorsteuerventil schaltet den Steuerdruck von pneumatischen Wegeventilen, deren Ventilglied - vorzugsweise Schieber - zumindest in eine Bewegungsrichtung per Steuerdruck betätigt werden. Das Vorsteuerventil selbst wird dabei elektrisch angesteuert. Über die Vorsteuerung wird nicht allein das elektrische Ansteuersignal in ein pneumatisches Ansteuersignal umgewandelt; es wird darüber hinaus auch eine Art Verstärkung des Ansteuersignals bewirkt.

Aus der DE 103 50 790 A1 geht ein gattungsgemäßes elektropneumatisches Sitzventil hervor. Das Sitzventil besteht im Wesentlichen aus einem Ventilabschnitt mit Verschlusselement für Ventilsitze und einem Magnetabschnitt zum Antreiben des Verschlusselements. Der Magnetabschnitt weist einen festen Anker mit einer diesen umgebenden elektrischen Spule auf, der in einen Spulenkörper hineinragt und Bestandteil von magnetischen Flussleitmitteln ist. Zu den magnetischen Flussleitmitteln gehört außerdem eine etwa topfförmige magnetische Abdeckung, welche das äußere Gehäuse des Magnetabschnittes bildet und eine magnetische Platte, welche im Bereich eines koaxial zum festen Ankers angeordneten beweglichen Anker angeordnet ist und diesen unter anderem führt. Außen am Sitzventil ist als weiterer Hauptbestandteil ein Anschlussgehäuse angeordnet, das neben elektronischen Bauteilen auch die Anschlusskontakte des Sitzventils beherbergt.

Nachteilig bei diesem Stand der Technik ist, dass viele Einzelteile, insbesondere als Ankerführungsmittel oder Flussleitmittel, erforderlich sind, welche entsprechend aufwendig zu montieren sind. Jedes der einzelnen Bauteile, wie Spulenkörper, magnetische Platte, Federrückstellmechanismus und dergleichen sind aus fertigungstechnisch unvermeidbaren Gründen natürlich toleranzbehaftet, was wegen der hohen Dichtigkeitsanforderungen im Inneren des Sitzventils und zum Zwecke einer präzisen Ankerführung fertigungstechnische Schwierigkeiten mit sich bringt. Um den Dichtigkeitsforderungen zu genügen, sind relativ viele Dichtringe zwischen den einzelnen Bauteilen angeordnet, insbesondere zwischen Spulenkörper, magnetischer Platte und sich daran anschließendem Ventilabschnitt. Um das Zusammenfügen und Halten der Einzelteile zu gewährleisten, ist konstruktionstechnisch bedingt ausreichender Bauraum zu gewährleisten.

Es ist daher die Aufgabe der vorliegenden Erfindung, ein elektropneumatisches Sitzventil der vorstehend beschriebenen Art dahingehend weiterzuverbessern, dass der Montageaufwand bei der Fertigung reduziert wird und in einfacher Weise die Dichtheitsanforderungen erfüllt werden.

Die Aufgabe wird ausgehend von einem elektropneumatischen Sitzventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Ventilsitz eines elektropneumatischen Sitzventils Bestandteil eines Kunststoffelements ist, an welchem benachbart zu dem Ventilsitz außerdem ein Ankerführungsabschnitt als Ankerführungsmittel mit nachfolgendem Spulenkörperabschnitt zur Aufnahme der elektrischen Spule angeformt ist.

Der Vorteil der erfindungsgemäßen Lösung resultiert insbesondere aus einer Funktionsintegration. Denn ein einziges Bauteil - nämlich das spezielle Kunststoffelement - erfüllt verschiedene Funktionen, wie Stützfunktion für die Spule, Führungsfunktion für den Anker, Ventilfunktion für die Druckluftschaltung. Da diese Funktionselemente in einem Sitzventil der hier interessierenden Art gewöhnlich entlang der Ventilachse als Einzelbauteile hintereinander angeordnet sind, wird mit der funktionsintegrierten Lösung die Bildung einer Toleranzkette vermieden, was den hohen Dichtheitsanforderungen zu Gute kommt. Durch die weiterhin geschaffene Reduzierung von Einzelteilen sinkt der Montageaufwand entsprechend.

Das erfindungsgemäße spezielle Kunststoffelement vereint in einem einzigen Bauteil elektrische, magnetische, mechanische und pneumatische Teilfunktionen des Sitzventils. Das erfindungsgemäße elektropneumatische Sitzventil kann zudem recht kleinbauend ausgeführt werden, da auch Bauraum für ansonsten vorzusehende Verbindungsmittel zwischen einzelnen Bauteilen oder Dichtungen wegfallen kann. Daher eignet sich das elektropneumatische Sitzventil insbesondere zur Verwendung als Vorsteuerventil.

Gemäß einer weiteren, die Erfindung verbessernden Maßnahme ist vorgesehen, dass ein den beweglichen Anker umgebendes Flussleitblech als Bestandteil der magnetischen Flussleitmittel vorgesehen ist, das als Einlegeteil in eine Spritzgussform dienend von Kunststoffmaterial zur Bildung des Kunststoffelements umspritzt ist. Durch die Einbettung des Flussleitblechs im Kunststoff im Zuge der Herstellung des Kunststoffelements entfällt dessen separate und nachträgliche Montage.

Vorzugsweise ist das Kunststoffelement darüber hinaus zu dem dem Ventilsitz gegenüberliegenden Ende mit elektrischen Kontaktstiften zum Anschluss der elektrischen Spule versehen. Die elektrischen Kontaktstifte können in einfacher Weise an das Kunststoffelement angebracht werden und anschließend mit den Enden des zuvor auf den Spulenkörperabschnitt aufgewickelten Spulendraht elektrisch verbunden werden.

Es wird vorgeschlagen, als weiteren Bestandteil der magnetischen Flussleitmittel einen festen Anker vorzusehen, der mit dem beweglichen Anker in an sich bekannter Weise zusammenwirkt und an dem Ende des Kunststoffelements angeordnet ist, das dem Ventilsitz gegenüberliegt. An dieser Stelle ist der feste Anker vorzugsweise in den Spulenkörperabschnitt eingesteckt, wobei zwischen beiden Bauteilen ein radial dichtender Dichtring angeordnet ist. Die Verwendung eines radial dichtenden Dichtrings hat zudem den Vorteil, dass keine äußeren Kräfte zusätzlich aufgebracht werden müssen, um die erwünschte Dichtwirkung an dieser Stelle zu erzielen.

Die den beweglichen Anker rückstellende Feder kann in einfacher Weise im Bereich zwischen dem beweglichen Anker und dem festen Anker als Druckfeder angeordnet werden. Da sich die Feder damit im Innenbereich des Spulenkörperabschnitts befindet, sind weitere Führungsmittel und dergleichen nicht erforderlich.

Als weiteren Bestandteil der magnetischen Flussleitmittel kann das zumindest den Spulenkörperabschnitt umgebende Gehäuse genutzt werden, welches insoweit nach Art einer Blechkappe ausgebildet ist. Die Blechkappe kommt in Kontakt mit dem festen Magnetanker, welcher vorzugsweise in eine korrespondierende Öffnung seitens des Gehäuses eingefügt und dort befestigt ist. Über die relative Justage des festen Ankers zum Gehäuse kann der gewünschte Ventilhub in einfacher Weise eingestellt werden.

Vorzugsweise besteht der Ventilbereich des Sitzventils aus zwei Ventilsitzen, welche einander gegenüberliegen, wobei der im Kunststoffelement integrierte Ventilsitz vorzugsweise den Entlüftungssitz eines 3/2-Wegeventils bildet, wogegen der gegenüberliegende Ventilsitz als Belüftungssitz verwendet wird. Beide Ventilsitze werden wechselseitig über ein geeignetes Verschlusselement betätigt, so dass die 3/2-Wegeventilfunktion verwirklicht wird.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: einen Längsschnitt eines elektropneumatischen Sitzventils, und
- Fig.2: einen Längsschnitt des innerhalb des Sitzventils nach Fig.1 angeordneten Kunststoffelements mit integriertem Flussleitblech.

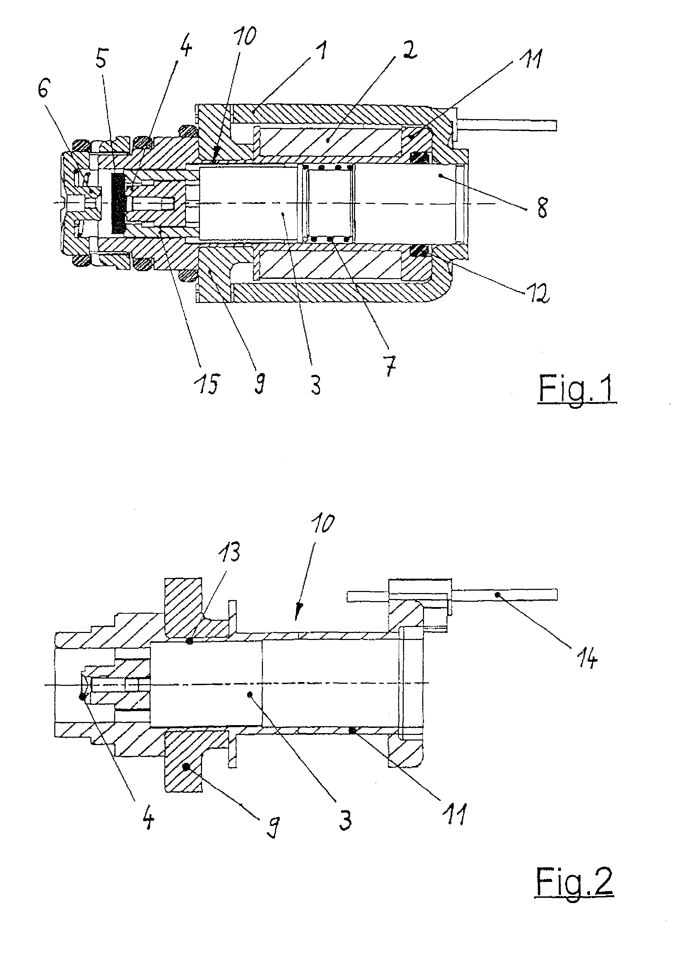

Gemäß Fig.1 besteht das hier als Vorsteuerventil konzipierte elektropneumatische Sitzventil im Wesentlichen aus einer innerhalb eines Gehäuses 1 untergebrachten elektrischen Spule 2, welche zum elektromagnetisch axialen Antrieb eines beweglichen Ankers 3 dient, der wiederum über eine Stößelgabel 15 ein Verschlusselement 5 betätigt. Das Verschlusselement 5 hebt dabei von einem Ventilsitz 4, welcher einen Entlüftungssitz bildet ab, und verschließt den gegenüberliegenden Belüftungssitz 6. Das elektropneumatische Sitzventil ist insoweit als 3/2-Wegeventil ausgebildet.

Darüber hinaus ist das elektropneumatische Sitzventil monostabil. Somit ist eine Feder 7 vorgesehen, welche den beweglichen Anker 3 bei Fehlen eines elektrischen Ansteuersignals auf den Belüftungssitz 6 drückt. Die Feder 7 wirkt dabei zwischen dem beweglichen Anker 3 und einem dem gegenüber (orts-) festen Anker 8.

Der feste Anker 8 ist Bestandteil von magnetischen Flussleitmitteln, welche ihre Fortsetzung finden in dem nach Art einer Blechkappe ausgebildeten Gehäuse 1, welches wiederum mit einem Flussleitblech 9 zusammenwirkt, das die magnetischen Flusslinien an den benachbarten beweglichen Anker 3 weiterleitet, so dass hierdurch der magnetische Kreis geschlossen ist. Der feste Anker 8 ist gegenüber einem Spulenkörperabschnitt 11 der elektrischen Spule 2 über einen radial dichtenden Dichtring 12 abgedichtet. Der Spulenkörperabschnitt 11 ist Bestandteil eines multifunktionalen Kunststoffelements 10.

Gemäß Fig.2 besteht das Kunststoffelement 10 neben dem Spulenkörperabschnitt 11 zur Aufnahme der Wickelungen der elektrischen Spule 2 aus einem sich hieran anschließenden Ankerführungsabschnitt 13 zur axialen Führung des hiervon umschlossenen beweglichen Ankers 3 sowie des sich in Verlängerung des Ankerführungsabschnitts 13 angeformten Ventilsitz 4. Das Flussleitblech 9 ist von dem Kunststoffmaterial des Kunststoffelements 10 umspritzt, in dem das Flussleitblech 9 als Einlegeteile in eine - nicht weiter dargestellte - Spritzgussform verwendet wird. Gegenüberliegend zu dem Ventilsitz 4 weist das Kunststoffelement 10 elektrische Kontaktstifte 14 zum Anschluss der - hier nicht weiter dargestellten - elektrischen Spule auf.

Die Erfindung ist nicht beschränkt auf das vorstehend beschriebene Ausführungsbeispiel. So ist es auch möglich, dass andere Ventilfunktionen, beispielsweise die Ventilfunktion eines 2/2-Wegeventils und dergleichen mit dem Erfindungsgegenstand realisiert werden können.

Die Erfindung stellt eine platzoptimierte Lösung dar, welche hohe Anforderungen an Dichtheit erfüllt und eine einfache Justage und Montage der wenigen Einzelteile ermöglicht, da über das funktionsintegrierte Kunststoffelement mehrere Komponenten fest miteinander verbunden sind, ergibt sich eine toleranzunempfindliche Gesamtkonstruktion, welche unter anderem auch eine exakte Ankerführung sicherstellt.

### Bezugszeichenliste

- 1: Gehäuse
- 2: elektrische Spule
- 3: beweglicher Anker
- 4: Ventilsitz
- 5: Verschlusselement
- 6: Ventilsitz
- 7: Feder
- 8: fester Anker
- 9: Flussleitblech
- 10: Kunststoffelement
- 11: Spulenkörperabschnitt
- 12: Dichtring
- 13: Ankerführungsabschnitt
- 14: elektrischer Kontaktstift
- 15: Stößelgabel

## Patentansprüche

1. Elektropneumatisches Sitzventil, insbesondere Vorsteuerventil, mit einer innerhalb eines Gehäuses (1) untergebrachten elektrischen Spule (2) zum elektromagnetischen Antrieb eines beweglichen Ankers (3), der über eine Feder (7) rückgestellt und über Ankerführungsmittel axial zur Betätigung mindestens eines Ventilsitzes (5) geführt ist, und der zur Verstärkung der magnetischen Kraft mit magnetischen Flussleitmitteln zusammenwirkt,
**dadurch gekennzeichnet, dass** der Ventilsitz (4) Bestandteil eines Kunststoffelements (10) ist, an welchem benachbart zum Ventilsitz (4) ein Ankerführungsabschnitt (13) als Ankerführungsmittel mit nachfolgendem Spulenkörperabschnitt (11) zur Aufnahme der elektrische Spule (2) angeformt ist.

2. Elektropneumatisches Sitzventil nach Anspruch 1,
**dadurch gekennzeichnet, dass** ein den beweglichen Anker (3) umgebendes Flussleitblech (9) als Bestandteil der magnetischen Flussleitmittel vorgesehen ist, das als Einlegeteil in eine Spritzgussform dienend von Kunststoffmaterial zur Bildung des Kunststoffelements (10) umspritzt ist.

3. Elektropneumatisches Sitzventil nach Anspruch 1,
**dadurch gekennzeichnet, dass** das Kunststoffelement (10) zu dem dem Ventilsitz (4) gegenüberliegenden Ende mit elektrischen Kontaktstiften (14) zum Anschluss der elektrischen Spule (2) versehen ist.

4. Elektropneumatisches Sitzventil nach Anspruch 1,
**dadurch gekennzeichnet, dass** das Kunststoffelement (10) zu dem dem Ventilsitz (4) gegenüberliegenden Ende mit einem festen Anker (8) versehen ist, der als weiterer Bestandteil der magnetischen Flussleitmittel mit dem beweglichen Anker (3) zusammenwirkt.

5. Elektropneumatisches Sitzventil nach Anspruch 4,
**dadurch gekennzeichnet, dass** zwischen dem festen Anker (8) und dem diesen umgebenen Spulenkörperabschnitt (11) ein radial dichtender Dichtring (12) angeordnet ist.

6. Elektropneumatisches Sitzventil nach Anspruch 4,
**dadurch gekennzeichnet, dass** die den beweglichen Anker (3) rückstellende Feder (7) im Bereich des Spulenkörperabschnitts (11) axial zwischen dem beweglichen Anker (3) und dem festen Anker (8) als Druckfeder fungierend angeordnet ist.

7. Elektropneumatisches Sitzventil nach Anspruch 1,
**dadurch gekennzeichnet, dass** das Gehäuse (1) nach Art einer Blechkappe ausgebildet ist, die einen weiteren Bestandteil der magnetischen Flussleitmittel bildet.

8. Elektropneumatisches Sitzventil nach einem der vorstehenden Ansprüche,
**dadurch gekennzeichnet, dass** der Ventilsitz (5) den Entlüftungssitz eines monostabilen 3/2-Wegeventils bildet.

9. Elektropneumatisches Sitzventil nach Anspruch 8,
**dadurch gekennzeichnet, dass** dem als Entlüftungssitz dienenden Ventilsitz (4) ein Belüftungssitz (6) gegenüberliegt, deren wechselseitige Betätigung mittels desselben Verschlusselements (5) erfolgt.

10. Verwendung des elektropneumatischen Sitzventils nach einem der vorstehenden Ansprüche als ein Vorsteuerventil für ein pneumatisches Schieberventil.
